# FASCICULE DE BREVET EUROPEEN

(11) **EP 0 771 414 B1**
(45) Date de publication et mention de la délivrance du brevet: **22.09.1999**
(21) Numéro de dépôt: 95925894.8
(22) Date de dépôt: 17.07.1995
(51) Int. Cl.: G01L 3/14, G01L 3/10

(54) **DISPOSITIF DE MESURE DE COUPLE**
VORRICHTUNG ZUM MESSEN DES DREHMOMENTS
TORQUE MEASURING DEVICE

(30) Priorité: 18.07.1994 FR 9408864
(43) Date de publication de la demande: 07.05.1997
(73) Titulaire: ROCKWELL LIGHT VEHICLE SYSTEMS - FRANCE, en abrégé: ROCKWELL LVS - FRANCE, 92082 Paris La Defense 2 (FR)
(72) Inventeur: NOMERANGE, Hervé, F-14000 Caen (FR)
(74) Mandataire: Habasque, Etienne Joel Jean-François
(86) Numéro de dépôt international: FR9500954
(87) Numéro de publication internationale: WO9602816

(56) Documents cités:
- EP-A- 0 271 633
- DE-A- 4 231 646
- FR-A- 2 714 463
- US-A- 4 592 241
- US-A- 4 697 460
- PATENT ABSTRACTS OF JAPAN vol. 6 no. 5 (P-097) ,13 Janvier 1982 & JP,A,56 130632 (RICOH CO. LTD.) 13 Octobre 1981,
- PATENT ABSTRACTS OF JAPAN vol. 15 no. 205 (P-1206) ,27 Mai 1991 & JP,A,03 053138 (HITACHI LTD.) 7 Mars 1991,

## Description

La présente invention concerne un dispositif de mesure de couple.

Plus particulièrement, l'invention se rapporte aux dispositifs de mesure de couple qui sont insérés entre deux portions d'arbre coaxiales d'entraînement reliant un organe menant et un organe mené.

De tels dispositifs sont par exemple utilisés dans les ensembles de lève-vitres électriques de véhicules automobiles ou dans les ensembles de toits ouvrants électriques des véhicules.

On sait que l'un des problèmes les plus importants concernant le fonctionnement de ces ensembles de lève-vitres est leur sécurité de fonctionnement et en particulier le contrôle du fonctionnement de ceux-ci lorsqu'un objet quelconque est coincé entre la vitre et le reste de la porte du véhicule.

Ce fonctionnement peut être contrôlé par exemple à partir de la vitesse de rotation de l'arbre de sortie du moteur d'entraînement de ces ensembles, du courant consommé par celui-ci ou encore du couple résistant appliqué sur l'arbre de sortie de celui-ci.

L'invention s'intéresse plus particulièrement aux dispositifs de ce dernier type.

On connait en effet dans l'état de la technique des dispositifs de mesure de couple qui sont insérés entre deux portions d'arbre coaxiales d'entraînement reliant un organe menant, tel qu'un moteur électrique, et un organe mené, tel qu'un mécanisme à roue et vis sans fin de lève-vitre et qui comportent deux disques disposés en regard l'un de l'autre dans des plans à peu près perpendiculaires à l'axe de portions d'arbre et portant à leur périphérie des moyens de codage de position, reliés chacun à une portion d'arbre et l'un à l'autre par un tampon de matériau élastiquement déformable, tandis que des moyens de détection de position sont disposés en regard des moyens de codage de position des disques.

La sortie de ces moyens de détection de position est reliée à des moyens de détermination de couple par analyse des informations délivrées par ces moyens de détection de position.

On sait également que les moyens de codage de position et les moyens de détection de position correspondants peuvent être formés par des moyens optiques ou magnétiques.

Dans l'état de la technique, les moyens de détection de position comprennent deux capteurs disposés en regard des moyens de codage des disques et la détermination du couple se fait à partir des signaux de sortie de ces deux capteurs par analyse du décalage entre ces signaux, résultant d'une déformation du tampon de matériau élastiquement déformable sous l'effet du couple.

Cependant, on conçoit que cette structure présente un certain nombre d'inconvénients, notamment en raison du nombre de pièces nécessaires et donc du coût de réalisation de ces dispositifs.

Le but de l'invention est donc de résoudre ces problèmes en proposant un dispositif de mesure de couple qui soit simple et fiable.

A cet effet, l'invention a pour objet un dispositif de mesure de couple, inséré entre deux portions d'arbre coaxiales d'entraînement reliant un organe menant et un organe mené, du type comportant deux disques disposés en regard l'un de l'autre dans des plans à peu près perpendiculaires à l'axe des portions d'arbre et portant à leur périphérie des moyens de codage de position, reliés chacun à une portion d'arbre et l'un à l'autre par un tampon de matériau élastiquement déformable et des moyens de détection de position disposés en regard des moyens de codage de position des disques, dont la sortie est reliée à des moyens de détermination de couple, caractérisé en ce que les moyens de codage de position sont formés par des parties en saillie axiale alternées des disques, s'étendant en regard du tampon de matériau élastiquement déformable, en ce que les moyens de détection de position comprennent un capteur de position disposé en regard des parties en saillie alternées et en ce que les moyens de détermination de couple comprennent des moyens d'analyse du rapport cyclique des signaux de sortie du capteur.

Avantageusement, des moyens formant entretoise axiale sont disposés entre les disques dans le tampon de matériau élastiquement déformable.

L'invention sera mieux comprise à la lecture de la description qui va suivre, donnée uniquement à titre d'exemple et faite en se référant aux dessins annexés, sur lesquels :
- la Fig.1 représente une vue en coupe schématique illustrant la structure d'un mécanisme d'entraînement de lève-vitre comportant un dispositif de mesure de couple selon l'invention;
- la Fig.2 représente une vue de côté d'un disppsitif de mesure de couple selon l'invention; et
- la Fig.3 représente une vue en coupe prise suivant la ligne III-III de la figure 2.

Ainsi qu'on peut le voir sur ces figures, un dispositif de mesure de couple selon l'invention peut être intégré dans des moyens d'entraînement d'un lève-vitre de véhicule automobile.

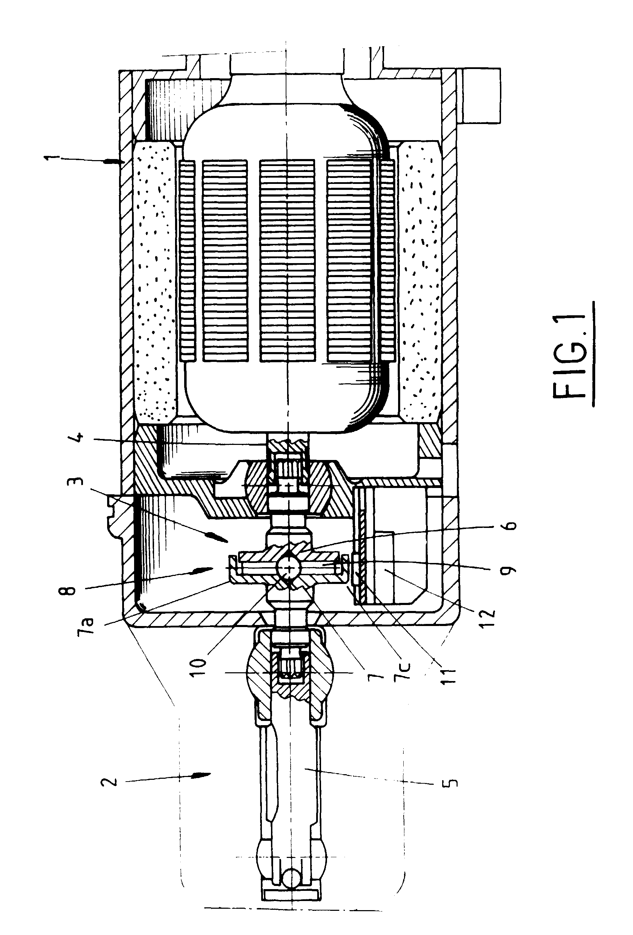

Ces moyens d'entraînement comprennent un moteur électrique désigné par la référence générale 1 sur cette figure 1 et un mécanisme à roue et vis sans fin désigné par la référence générale 2 sur cette figure.

Dans ce cas, le dispositif de mesure de couple désigné par la référence générale 3 sur ces figures, est inséré entre deux portions d'arbre coaxiales d'entraînement reliant le moteur électrique 1 au mécanisme à roue et vis sans fin 2.

Ces portions d'arbre sont désignées respectivement par les références 4 et 5.

En fait, ce dispositif de mesure de couple peut être inséré entre deux portions d'arbre coaxiales d'entraînement reliant tout organe menant et tout organe mené.

Ce dispositif de mesure comporte deux disques 6 et 7 disposés en regard l'un de l'autre dans des plans à peu près perpendiculaires à l'axe des portions d'arbre, le disque 6 étant relié à la portion d'arbre 4 tandis que le disque 7 est relié à la portion d'arbre 5.

Comme cela sera décrit plus en détail par la suite, ces disques portent à leur périphérie des moyens de codage de position désignés par la référence générale 8.

Par ailleurs, ces disques sont également reliés l'un à l'autre par un tampon de matériau élastiquement déformable 9 dans lequel sont disposés des moyens formant entretoise axiale désignés par la référence 10.

Ces moyens formant entretoise axiale sont par exemple constitués par un organe en forme de bille interposé entre les disques pour éviter tout problème de déformation axiale par compression du dispositif de mesure de couple.

Des moyens de détection de position désignés par la référence générale 11 sur cette figure, sont également disposés en regard des moyens de codage de position 8 des disques et la sortie de ces moyens de détection de position est reliée à des moyens de détermination de couple désignés par la référence générale 12.

Selon l'invention, et comme on peut le voir sur ces figures 1 à 3, les moyens de codage de position sont formés par des parties en saillie axiale alternées des disques 6 et 7 s'étendant en regard du tampon de matériau élastiquement déformable 9.

C'est ainsi que dans l'exemple de réalisation représenté sur ces figures, chaque disque du dispositif de mesure de couple comporte quatre parties en saillie axiale décalées de 90° les unes par rapport aux autres et désignées par les références 6a, 6b, 6c, 6d et 7a, 7b, 7c, 7d, respectivement pour les disques 6 et 7.

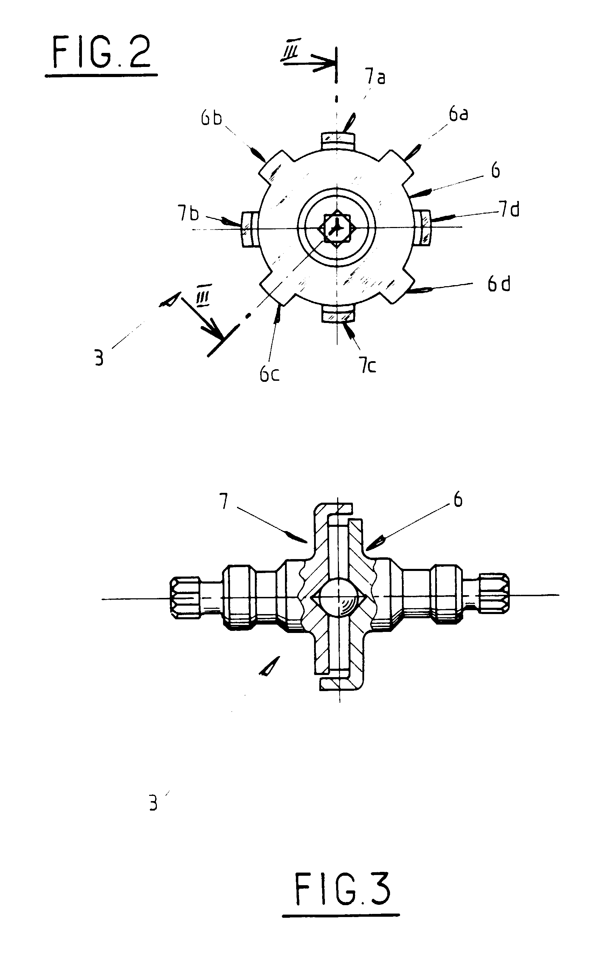

Ces parties en saillie axiale des disques 6 et 7 sont alternées comme on peut le voir en particulier sur la figure 2, les parties en saillie de l'un des disques étant décalées de 45° par rapport à celles de l'autre disque.

Les moyens de détection de position 11 comprennent quant à eux un capteur de position disposé en regard de ces parties en saillie alternées et les moyens de détermination de couple 12 comprennent des moyens d'analyse du rapport cyclique des signaux de sortie de ce capteur.

On conçoit en effet qu'au repos, c'est à dire en l'absence de couple, les parties en saillie axiale alternées des moyens de codage de position sont régulièrement répartis autour du tampon de matériau élastiquement déformable.

Lorsqu'un couple résistant est appliqué au dispositif de mesure, le tampon élastiquement déformable a tendance à se déformer, de sorte que les disques se décalent angulairement l'un par rapport à l'autre.

On conçoit alors que les parties en saillie axiale alternées de ces disques se rapprochent et s'éloignent en fonction de ce couple et que celles-ci ne sont donc plus régulièrement réparties autour du tampon.

Ces variations de position de ces parties en saillie sont détectées par le capteur de position et les moyens d'analyse 12 connectés à la sortie de ce capteur, permettent de déterminer en fonction de cette variation de position, le couple à mesurer par analyse du rapport cyclique du signal de sortie du capteur.

Ainsi ce rapport cyclique du signal de sortie de ce capteur est par exemple de 50% dans le cas où il n'y a pas de couple, tandis que lorsqu'un couple est appliqué sur ce dispositif, celui-ci peut être déterminé à partir de ce rapport cyclique qui est représentatif de ce couple, comme cela a été expliqué précédemment.

On notera que ces moyens de codage de position des disques peuvent être formés par des parties en saillie magnétiques de ceux-ci et que les moyens de détection de position peuvent comporter un capteur à effet Hall.

Cependant, des moyens de détection optiques peuvent également être utilisés.

On conçoit alors que le dispositif de mesure selon l'invention présente un certain nombre d'avantages dans la mesure où il ne nécessite qu'un seul capteur pour déterminer le couple.

Par ailleurs, ce dispositif présente une fonction de sécurité intégrée dans la mesure où il assure une limitation de la déformation du tampon de matériau élastiquement déformable par venue en butée des parties en saillie alternées des disques, les unes contre les autres, pour éviter toute dégradation de ce tampon.

Par ailleurs, il est également possible de prévoir des parties en saillie de largeurs différentes sur les disques, ce qui permet de détecter le sens de rotation des portions d'arbre d'entraînement par analyse de la séquence des signaux délivrés par le capteur de position.

Cette analyse peut également être réalisée par les moyens d'analyse du rapport cyclique des signaux de sortie de ce capteur de position.

## Revendications

1. Dispositif de mesure de couple, inséré entre deux portions d'arbre coaxiales d'entraînement (4,5) reliant un organe menant (1) et un organe mené (2), du type comportant deux disques (6,7) disposés en regard l'un de l'autre dans des plans à peu près perpendiculaires à l'axe des portions d'arbre et portant à leur périphérie des moyens de codage de position (8), reliés chacun à une portion d'arbre et l'un à l'autre par un tampon de matériau élastiquement déformable (9) et des moyens (11) de détection de position disposés en regard des moyens de codage de position des disques, dont la sortie est reliée à des moyens (12) de détermination de couple, caractérisé en ce que les moyens de codage de position sont formés par des parties en saillie axiale alternées (6a,6b,6c,6d, 7a,7b,7c,7d) des disques, s'étendant en regard du tampon de matériau élastiquement déformable (9), en ce que les moyens de détection de position (11) comprennent un capteur de position disposé en regard des parties en saillie alternées et en ce que les moyens de détermination de couple comprennent des moyens (12) d'analyse du rapport cyclique des signaux de sortie du capteur.

2. Dispositif selon la revendication 1, caractérisé en ce que des moyens formant entretoise axiale (10) sont disposés entre les disques (6,7) dans le tampon de matériau élastiquement déformable.

3. Dispositif selon la revendication 2, caractérisé en ce que les moyens formant entretoise axiale comprennent un organe en forme de bille (10).

4. Dispositif selon l'une quelconque des revendications précédentes, caractérisé en ce que les moyens de codage de position des disques sont formés par des parties en saillie magnétiques et en ce que les moyens de détection de position comprennent un capteur à effet Hall.

5. Dispositif selon l'une quelconque des revendications précédentes, caractérisé en ce que les disques de codage (6,7) comprennent chacun quatre parties en saillie axiale disposées à 90° les unes par rapport aux autres et décalées de 45° par rapport aux parties en saillie de l'autre disque.

6. Dispositif selon l'une quelconque des revendications précédentes, caractérisé en ce que lesdites parties en saillie alternées des disques (6,7) présentent des largeurs différentes et en ce que les moyens d'analyse (12) du rapport cyclique des signaux de sortie du capteur comprennent des moyens de détection du sens de rotation des portions d'arbre coaxiales.

## Claims

1. Torque-measuring device, inserted between two coaxial portions of a drive shaft (4, 5) connecting a driving component (1) and a driven component (2), of the type comprising two discs (6, 7) arranged facing one another in planes substantially perpendicular to the axis of the shaft portions and having at their periphery position-encoding means (8), each connected to a portion of shaft and one to the other by an elastically deformable pad of material (9) and position-detection means (11) arranged facing the position-encoding means of the discs, the output of which is connected to torque-determination means (12), characterised in that the position-encoding means are formed by alternating axially-projecting parts of the discs (6a, 6b, 6c, 6d, 7a, 7b, 7c, 7d), extending facing the elastically deformable pad of material (9), in that the position-detection means (11) comprise a position sensor arranged facing the alternating projecting parts and in that the torque-determination means comprise means (12) for analysis of the phase relationship of the output signals from the sensor.

2. Device in accordance with Claim 1, characterised in that means forming an axial brace (10) are arranged between the discs (6, 7) in the elastically deformable pad of material.

3. Device in accordance with Claim 2, characterised in that the means forming an axial brace comprise a component in the form of a ball (10).

4. Device in accordance with any one of the preceding claims, characterised in that the means for encoding the position of the discs are formed by magnetic projecting parts and in that the position-detecting means comprise a Hall-effect sensor.

5. Device in accordance with any one of the preceding claims, characterised in that the encoding discs (6, 7) each comprise four axially-projecting parts arranged at 90° relative to one another and 45° out of phase relative to the projecting parts of the other disc.

6. Device in accordance with any one of the preceding claims, characterised in that the said alternating projecting parts of the discs (6, 7) have different widths and in that the means for analysis (12) of the phase relationship of the output signals of the sensor comprise means for detecting the direction of rotation of the coaxial shaft portions.

## Patentansprüche

1. Vorrichtung zum Messen des Drehmoments, die zwischen zwei koaxiale, ein Antriebselement (1) und ein angetriebenes Element (2) miteinander verbindende, koaxiale Antriebswellenabschnitte (4,5) eingesetzt ist und zwei Scheiben (6,7) aufweist, die einander gegenüberliegend in im wesentlichen zu der Achse der Wellenabschnitte senkrechten Ebenen angeordnet sind und an ihrem Umfang Positionscodiermittel (8) tragen, und die jeweils mit einem Wellenabschnitt sowie miteinander durch ein Pufferelement (9) aus elastisch verformbarem Material verbunden sind, sowie Positionserfassungsmittel (11), die gegenüber den Scheiben-Positionscodiermitteln angeordnet sind und deren Ausgang mit Mitteln (12) zum Bestimmen des Drehmoments verbunden ist, dadurch gekennzeichnet,
daß die Positionscodiermittel durch alternierende, axial vorstehende Teile (6a,6b,6c,6d,7a,7b,7c,7d) der Scheiben gebildet sind, die sich gegenüber dem Pufferelement (9) aus elastisch verformbaren Material erstrecken,
daß die Positionserfassungsmittel (11) einen gegenüber den alternierenden, axial vorstehenden Teilen angeordneten Positionsfühler aufweisen, und
daß die Mittel zum Bestimmen des Drehmoments Mittel (12) zum Analysieren des Taktverhältnisses (rapport cyclique) der Ausgangssignale des Fühlers umfassen.

2. Vorrichtung gemäß Anspruch 1, dadurch gekennzeichnet, daß eine axiale Versteifung bildende Mittel (10) zwischen den Scheiben (6,7) in dem Pufferelement aus elastisch verformbarem Material angeordnet sind.

3. Vorrichtung gemäß Anspruch 2, dadurch gekennzeichnet, daß die eine Versteifung bildenden Mittel ein Element in Form einer Kugel (10) aufweisen.

4. Vorrichtung gemäß einem der vorangehenden Ansprüche, dadurch gekennzeichnet, daß die Positionscodiermittel der Scheiben von magnetischen Vorsprungsteilen gebildet sind und die Positionserfassungsmittel einen Halleffekt-Meßfühler umfassen.

5. Vorrichtung gemäß einem der vorangehenden Ansprüche, dadurch gekennzeichnet, daß die Codierscheiben (6,7) jeweils vier axial vorstehende Teile aufweisen, die zueinander im Winkel von 90° angeordnet und gegenüber den vorstehenden Teilen der anderen Scheibe um 45° versetzt sind.

6. Vorrichtung gemäß einem der vorangehenden Ansprüche, dadurch gekennzeichnet, daß die alternierend axial vorstehenden Teile der Scheiben (6,7) verschiedene Breiten haben, und daß die Mittel (12) zum Analysieren des Taktverhältnisses der Ausgangssignale des Meßfühlers Mittel zum Erfassen der Drehrichtung der koaxialen Wellenabschnitte aufweisen.
